# EUROPÄISCHE PATENTANMELDUNG

(11) **EP 2 657 663 A1**
(43) Veröffentlichungstag der Anmeldung: **30.10.2013**
(21) Anmeldenummer: 12165916.3
(22) Anmeldetag: 27.04.2012
(51) Int. Cl.: G01F 23/26

(54) **Kapazitiver Füllstandssensor**

(71) Anmelder: Sick AG, 79183 Waldkirch (DE)
(72) Erfinder: Weber, Thomas, 77960 Seelbach (DE); Jahner, Richard, 79114 Freiburg (DE)
(74) Vertreter: Hehl, Ulrich

(57) **Zusammenfassung**

Es wird ein kapazitiver Füllstandssensor (10) mit einer Sonde (16) angegeben, die in einer Längsrichtung mehrere aufeinanderfolgende Segmente (28) mit in den Segmenten (28) angeordneten Elektroden (24) aufweist, wobei eine Mess- und Auswerteeinheit (20) vorgesehen ist, die dafür ausgebildet ist, eine Kapazität an den Elektroden (24) zu bestimmen und daraus einen Füllstand zu berechnen. Dabei sind in jedem Segment (28) mehrere Elektroden (24) angeordnet, und die Mess- und Auswerteeinheit (20) bestimmt die Kapazität zwischen Elektroden (24) eines Segments (28).

## Beschreibung

Die Erfindung betrifft einen kapazitiven Füllstandssensor mit einer segmentierten Sonde sowie ein Verfahren zur Bestimmung des Füllstands eines Mediums nach dem Oberbegriff von Anspruch 1 beziehungsweise 15.

Ein bekanntes Prinzip zur Bestimmung von Füllständen in einem Behälter basiert auf Kapazitätsmessung. Dazu wird eine Sonde in den Behälter eingeführt und die Kapazität zwischen der Sonde und einer Referenz gemessen. Diese Kapazität wird durch die dielektrischen Eigenschaften des Mediums je nach Füllstand verändert. Bei bekannter Dielektrizitätskonstante des Mediums, die beispielsweise durch eine Referenzmessung ermittelt wird, kann somit aus der gemessenen Kapazität der Füllstand berechnet werden.

Als Referenz dienen ein metallischer Behälter, eine eingebrachte Metallfläche oder eine zweite Sonde, die üblicherweise auf Masse liegen. Die Messung der Kapazität gegen eine Behälterwand ist zum einen auf metallische Behälter beschränkt, zum anderen beeinflusst die Behältergeometrie die Kapazität. Eine eigens eingebrachte zusätzliche Metallfläche oder Sonde erfordert zusätzlichen Aufwand.

Im Stand der Technik sind Sonden bekannt, die in Längsrichtung eine Vielzahl von Segmenten aufweisen. Dann werden Kapazitäten segmentweise gegen die Referenz vermessen. Eine Beeinträchtigung der Kapazitätsmessung, wie eine Verunreinigung der Elektrode, wird dabei lokal auf ein Segment begrenzt. Je nach Messverfahren bleibt die Auflösung auf die Höhe der Segmente beschränkt, es wird also lediglich festgestellt, welche Segmente in das Medium eingetaucht sind.

Aus der DE 100 08 093 B4 ist ein Ausgangsmaterial zur Herstellung eines mehrere Sensorfelder aufweisenden Füllstandssensors eines kapazitiven Füllstandsmessgerätes bekannt. Dabei ist eine Reihe von flächenförmigen, übereinander liegenden Sensorfeldern auf einem flächigen Material vorgesehen. Die Sensorfelder sind zunächst über eine Matrix von Leiterbahnen angebunden, und danach werden diejenigen Leiterbahnen aufgetrennt, die nicht funktionsnotwendig sind. Das Messverfahren selbst wird nicht näher erläutert, verwendet aber laut Einleitung eine Referenzelektrode, um Kapazitäten zwischen dem Sensorfeld und dieser Referenzelektrode zu bestimmen. Kapazitäten innerhalb des Sensorfeldes werden demnach nicht gemessen, und die konkret dargestellten Geometrien würden dies auch nicht erlauben. Das gilt auch gegenüber der einleitend erwähnten Möglichkeit, dass die übereinanderliegenden Sensorfelder überlappend und/oder nebeneinander ausgebildet sein könnten, denn dies soll nur zusätzlich zu einer zwingend vorgesehenen Übereinanderordnung denkbar sein.

In der DE 102 05 445 wird ein der DE 100 08 093 B4 entsprechender kapazitiver Füllstandssensor beschrieben, der einen zusätzlichen Zustand ermitteln kann, bei dem kein Sensorfeld mit der Versorgungs- und Auswerteschaltung verbunden ist.

In der DE 103 22 279 A1 wird ein Füllstand durch Messung der Kapazität zwischen einer Sonde und einer Behälterwand oder einer zweiten Sonde gemessen. Dazu erzeugt ein Mikroprozessor ein Spannungsansteuersignal und wertet einen Messstrom der Sonde aus.

Eine Füllstandsmessvorrichtung gemäß EP 0 538 182 A1 verwendet eine segmentierte Sonde, bei der ein metallisches Rohr als eine Platte des Mess-Kondensators dient, während die zweite Platte als konzentrisch dazu angeordnete Rohrsegmente ausgebildet ist, wobei die Länger der einzelnen Rohrsegmente ein Mehrfaches ihres Durchmessers beträgt.

In der US 5,613,399 wird der Füllstand in einem Behälter mit einer Sonde erkannt, die einzeln anregbare Eingangselektroden und eine gemeinsame Ausgangselektrode aufweist.

Die US 6,539,797 B2 beschreibt einen kapazitiven Füllstandssensor, der zumindest eine untere Elektrode für eine Referenzmessung innerhalb des Mediums, eine obere Elektrode für eine Referenzmessung außerhalb des Mediums sowie eine mittlere eigentliche Messelektrode zu Bestimmung der vom Füllstand des Mediums abhängigen Kapazität aufweist.

Bei einem kapazitiven Füllstandssensor gemäß US 6,490,920 B1 werden Elektrodenformen gewählt, mit denen zwei Kapazitätsmessungen ermöglicht sind, die in unterschiedlicher Weise mit dem Füllstand variieren. Dadurch wird eine kompensierte Messung ermöglicht, die von den elektrischen Eigenschaften des zu vermessenden Mediums unabhängig ist.

Aus der Arbeit von T.M. Shi et al., "Capacitance-based instrumentation for multiinterface level measurement", Meas. Sci. Technol. 2(1991), Seiten 923-933, ist eine Füllstandsmessung bekannt, mit der mehrere Grenzschichten gemessen werden können, beispielsweise eine Schaumschicht auf einem flüssigen Medium.

Verschiedene Anbieter stellen programmierbare Auswertungschips zur Kapazitätsmessung zur Verfügung, etwa ein PSoC (programmable System-on-Chip) der Firma Cypress, und nennen die Füllstandsmessung als mögliche Anwendung. Solche Auswertungschips sind sehr leistungsfähig und dennoch kostengünstig, da sie in großen Stückzahlen für bewegungsempfindliche Bildschirme (Touchscreens) oder Bedienfelder eingesetzt werden. Konkrete Lösungen, die den robusten Bedingungen der industriellen Realität standhalten, werden jedoch nicht beschrieben.

Vor diesem Hintergrund ist Aufgabe der Erfindung, die Messung mit einem kapazitiven Füllstandssensor zu verbessern.

Diese Aufgabe wird durch einen kapazitiven Füllstandssensor mit einer segmentierten Sonde sowie ein Verfahren zur Bestimmung des Füllstands eines Mediums nach Anspruch 1 beziehungsweise 15 gelöst. Dabei geht die Erfindung von dem Grundgedanken aus, die Kapazität mit Hilfe der Sonde segmentweise zu messen. Anstelle einer Referenzierung auf die Behälterwand oder der Verwendung einer zusätzlichen Referenzsonde ist vorgesehen, auf jedem Segment mehrere Elektroden anzuordnen und die Kapazität zwischen Elektroden eines Segments zu bestimmen. Üblicherweise ist die Sonde in der Weise in einen Behälter eingetaucht, dass die Segmente der Sonde vertikal übereinander angeordnet sind. Durch Messung der Kapazität zwischen nebeneinander liegenden Elektroden in einem Segment erhält man ein kontinuierliches Signal der Kapazitätsänderung aufgrund unterschiedlicher Füllhöhen des Mediums und somit ein kontinuierliches Füllstandssignal.

Die Erfindung hat den Vorteil, dass aufgrund der Segmentierung eine Vielzahl von Messungen ermöglicht ist. Das schafft Robustheit gegenüber Störungen an einem Segment, aber auch die Möglichkeit, mehrere geschichtete Medien zu messen oder verschiedene Referenz- und Kalibriermessungen durchzuführen. Indem die Kapazität zwischen Elektroden eines Segments gemessen wird, entsteht ein kontinuierliches Füllstandssignal. Zudem ist diese Messung unabhängig von einer Behältergeometrie und auch für nichtmetallische Behälter möglich. Zusätzliche Referenzflächen oder -sonden sind nicht erforderlich. Mit der Sonde kann ohne Totzone bis zum unteren Sondenende gemessen werden.

Die Elektroden erstrecken sich bevorzugt in Längsrichtung über jeweils ein gesamtes Segment. Damit verändert sich die Kapazität füllstandsabhängig über die Segmentausdehnung.

Die Elektroden eines Segments, zwischen denen die Mess- und Auswerteeinheit die Kapazität bestimmt, sind bevorzugt nebeneinander angeordnet. Bei üblicher vertikaler Montage der Sonde schneidet somit die Oberfläche des Mediums bei jedem Füllstand die nebeneinander liegenden Elektroden des jeweiligen Segments. Abweichungen von dieser Geometrie mit einem Versatz der Elektroden in Längsrichtung sind zwar denkbar, führen aber in der Regel zu Verschlechterungen der Messung, weil sich nicht mehr jede Höhenveränderung des Mediums in einer veränderten Kapazität zwischen den Elektroden niederschlägt.

Der Abstand zwischen den Elektroden eines Segments beträgt vorzugsweise 0,5-5 mm, insbesondere 1,6-2,1 mm. Die Elektroden liegen demnach in diesem Abstand nebeneinander. Dies führt bei einem Abstand von 1,7 mm zu einer optimalen Empfindlichkeit, d. h. zu einer möglichst großen füllstandsabhängigen Kapazitätsänderung, die leichter gemessen werden kann. Die genannten engeren Intervallgrenzen von 1,6 mm und 2,1 mm erfassen dieses Optimum zumindest noch weitgehend, wogegen kleinere Abstände als 0,5 mm oder größer Abstände als 5 mm zu merklichen Einbußen führen.

Die Elektroden weisen bevorzugt eine Breite von 5-20 mm, insbesondere 10 mm auf. Ähnlich dem gegenseitigen lateralen Abstand gibt es auch für die Elektrodenbreite ein Optimum der Empfindlichkeit der Kapazitätsmessung bei einer Breite von etwa 10 mm. Abweichungen von diesem Optimum bringen eine Verschlechterung mit sich, die innerhalb des genannten Intervalls von 5-20 mm noch begrenzt bleibt.

Jedes Segment weist bevorzugt eine maximal mögliche Anzahl von nebeneinander angeordneten Elektroden vorgegebener Breite in einem vorgegebenen Abstand zueinander auf. Gemäß den vorhergehenden Absätzen gibt es optimale Breiten und Abstände für die Elektroden, bei denen die Kapazitätsänderung mit dem Füllstand und damit die Empfindlichkeit der Messung besonders groß ist. Andererseits sollte die Sondenoberfläche möglichst ausgefüllt sein, um eine große Elektrodenfläche für eine möglichst genaue Kapazitätsbestimmung zur Verfügung zu stellen. Es ist deshalb besonders vorteilhaft, die Fläche auf der Sonde möglichst auszunutzen, indem so viele Elektroden nebeneinander untergebracht werden, wie unter Einhaltung solcher optimaler Breiten und Abstände möglich ist. Beispielsweise finden auf einer rohrförmigen Sonde mit einem Durchmesser von ca. 22 mm, der für übliche Prozessanschlüsse geeignet ist, vier oder sechs Elektroden unter Einhaltung dieser Bedingungen nebeneinander auf dem Umfang Platz.

Jedes Segment weist bevorzugt eine der der Mess- und Auswerteinheit zugewandte obere Seite auf, von welcher die Elektroden des Segments kontaktiert sind. Bei der üblichen Montage mit einer vertikal nach unten orientierten Sonde befinden sich somit die Leitungsanschlüsse oben an jedem Segment. Eine Anpassung der Sondenlänge an den zu verwendenden Behälter in Schritten einer ganzen Segmentlänge ist ohnehin in allen Ausführungsformen möglich. Bei der hier genannten Kontaktierung können aber sogar Segmente partiell abgetrennt werden, und es können weiterhin Füllstände über die gesamte verbleibende Sonde gemessen werden, da auch das durchtrennte Segment funktionstüchtig bleibt. Dadurch ist eine Anpassung der Sondenlänge an die Anwendung zumindest während der Fertigung mit geeigneten Kalibrierverfahren der Mess- und Auswerteeinheit und je nach Sondenmaterial sogar noch am Betriebsort problemlos möglich.

Die Elektroden und die Leiterbahnen, welche die Elektroden mit der Mess- und Auswerteeinheit verbinden, sind bevorzugt auf einer flexiblen Leiterplatte ausgebildet, welche anschließend zu einer gewünschten Form der Sonde verformt werden. Dadurch ist die Herstellung von Elektroden und deren Leiterbahnen bei flacher Geometrie möglich.

Die Anpassung an die Sondengeometrie erfolgt dann in einem zweiten Schritt, beispielsweise indem die Leiterplatte anschließend rohrförmig gerollt wird.

Die Leiterplatte weist vorzugsweise Abschirmelektroden auf. Dadurch werden Einflüsse auf die Kapazitäten vom Sondeninneren her unterdrückt. Fertigungstechnisch besonders einfach ist, wenn die Abschirmelektroden neben den Elektroden auf einer flexiblen Leiterplatte hergestellt werden und die Leiterplatte dann durch doppeltes Aufrollen eine rohrförmige Sonde mit den Elektroden in der äußeren Schicht und den Abschirmelektroden in einer darunterliegenden Schicht bildet.

Die Sonde ist vorzugsweise rohrförmig mit den Elektroden am Außenumfang und einem Leerrohr im Inneren ausgebildet. Die Elektroden liegen damit insbesondere am Außenrohr an. Es entsteht dann insgesamt eine Sonde in Form eines Hohlrohrs, beispielsweise mit einem Außendurchmesser von 22 mm und einer Wandstärke von 2 mm. Bei einer Sonde aus Kunststoff ist dadurch die mechanische Stabilität gegenüber einem Vollkörper erhöht. Zudem kann die Sonde mit Luft gefüllt werden, um die Grundkapazität der Sonde zu verringern.

Die Sonde ist bevorzugt im Wesentlichen rohrförmig ausgebildet, weist jedoch in Umfangsrichtung konvexe Wölbungen dort auf, wo Elektroden angeordnet sind. Die Elektroden bilden also in einem Querschnitt der Sonde Beulen oder Bäuche gegenüber einer Kreislinie. Dadurch gelangen mehr Feldlinien in das Medium, es ergibt sich eine stärkere Abhängigkeit der Kapazität von dem Füllstand und damit eine verbesserte Messempfindlichkeit.

Vorzugsweise ist mindestens eine dezentrale Mess- und Auswerteeinheit längs der Sonde vorgesehen, insbesondere im Inneren der Sonde, wobei der Datenaustausch zu der Mess- und Auswerteeinheit digital erfolgt. Bei längeren Sonden können die Leitungsverbindungen zwischen der Mess- und Auswerteeinheit und den Elektroden in den Segmenten spürbar zur Gesamtkapazität beitragen. Durch eine dezentrale Ansteuerung und Auswertung wird dieser Effekt auf kürzere Entfernungen beschränkt. Die Kommunikation erfolgt digital und kann damit so gestaltet werden, dass die Kapazitätsmessungen davon nicht gestört werden.

Vorzugsweise ist ein Temperatursensor in die Sonde integriert, wobei die Mess- und Auswerteeinheit dafür ausgebildet ist, mit dem Temperatursensor in Messpausen der Kapazitätsmessung zu kommunizieren. Die Temperatur ist eine zusätzliche Prozessgröße und damit als solche in vielen Anwendungen interessant. Außerdem beeinflusst die Temperatur auch die Kapazitätsmessung, so dass eine entsprechende Kennlinie hinterlegt und der Temperatureffekt kompensiert werden kann. Durch die Kommunikation in Messpausen der Kapazitätsmessung wird letztere nicht beeinträchtigt.

Die Mess- und Auswerteeinheit ist bevorzugt dafür ausgebildet, bei bekanntem Füllzustand bei einem Segment eine Referenzmessung der Grundkapazität durchzuführen. Auch die von Luft umgebenen Elektroden weisen eine Kapazität auf, für die Füllstandsmessung sind aber nur die Kapazitätsänderungen gegenüber dieser Grundkapazität relevant. Durch mechanische Einflüsse auf die Elektroden oder andere Effekte kann sich diese Grundkapazität ändern, so dass deren Bestimmung nicht nur für eine Erstkalibration, sondern auch für eine Autokompensation während des Betriebs genutzt werden kann.

Die Mess- und Auswerteeinheit ist bevorzugt für einen Plausibilitätstest ausgebildet, bei dem eine gemessene Kapazität an einem Segment, welche mit mindestens einem anderen Segment nicht konsistent ist, unberücksichtigt bleibt. An einem Segment kann aufgrund von Belägen oder Mediumsspritzern eine erhöhte Kapazität gemessen werden. Dies kann über Vergleiche mit anderen Segmenten als inkonsistent erkannt und ignoriert werden, beispielsweise wenn das untere Nachbarsegment einen niedrigen Füllstand erkennt, bei dem ein Kontakt mit dem Medium für das verschmutzte Segment nicht plausibel ist und woran dessen Kapazitätserhöhung als durch Verunreinigungen verursacht erkannt wird.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittansicht eines kapazitiven Füllstandssensors in einem Behälter;
- Fig. 2: eine Draufsicht auf eine flexible Leiterplatte mit Elektroden, aus der eine Sonde für einen Füllstandssensor hergestellt werden kann;
- Fig. 3: eine schematische Ansicht der Elektroden eines Segments einer Sonde eines Füllstandssensors;
- Fig. 4: ein beispielhafter idealisierter zeitabhängiger Verlauf der Kapazitätsmessung bei gleichmäßigem Eintauchen und anschließendem Auftauchen eines Füllstandssensors in einen Behälter;
- Fig. 5: eine Draufsicht auf eine flexible Leiterplatte mit Elektroden ähnlich Figur 2 hier mit zusätzlichen Abschirmelektroden; und
- Fig. 6: eine Schnittdarstellung einer Sonde, die in den Elektrodenbereichen eine vergrößerte Krümmung aufweist.

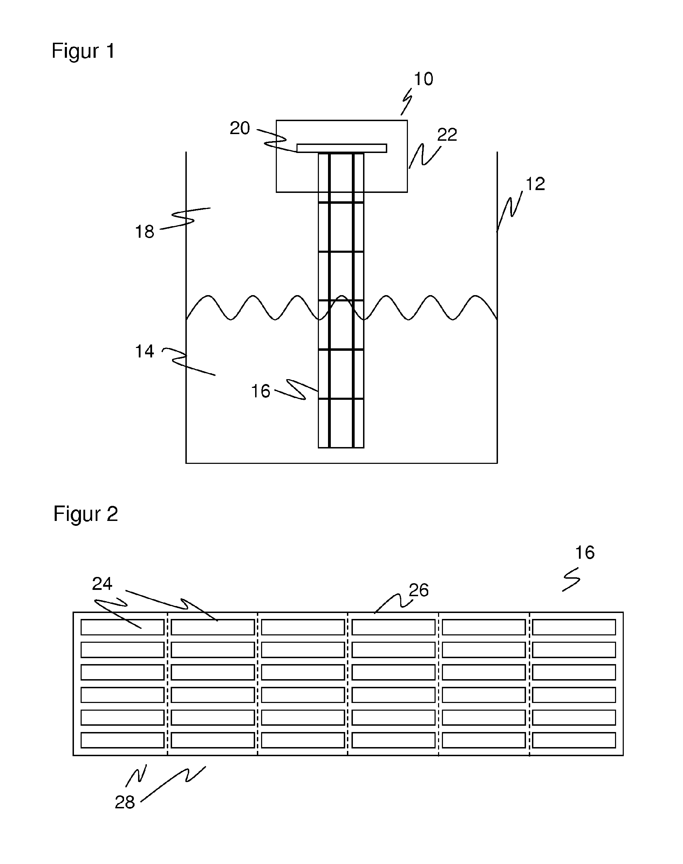

Figur 1 zeigt schematisch in einer Seitenansicht einen kapazitiven Füllstandssensor 10, der in einem Tank oder Behälter 12 mit einem Medium 14 angebracht ist. Eine Sonde 16 ragt in das Medium 14 hinein, vorzugsweise bis zum Boden des Behälters 12, um den Füllstand des Mediums 14 zu bestimmen. Prinzipiell es auch möglich, die Sonde 16 von unten in den Behälter 12 einzubauen, wobei dann die Auswertungen entsprechend umzukehren sind.

Aufgrund der unterschiedlichen dielektrischen Eigenschaften des Mediums 14 gegenüber der üblicherweise darüber befindlichen Luft 18 ändern sich die kapazitiven Eigenschaften der Sonde 16 in Abhängigkeit von dem Füllstand. Dies kann über Kapazitätsmessungen durch eine Mess- und Auswerteeinheit 20 in einem Sensorkopf 22 des Füllstandssensors 10 gemessen werden. Somit ist der Füllstandssensor 10 in der Lage, einen Messwert für die Füllhöhe des Mediums 14 in dem Behälter 12 und bei bekannter Behältergeometrie auch für das Volumen an vorhandenem Medium 14 auszugeben. Bei dem Medium 14 kann es sich beispielsweise um eine beliebige Flüssigkeit, wie Kühl- und Schmierstoffe, Hydrauliköle, Reinigungsmittel, Laborchemikalien oder Nasschemie in Fertigungsstrecken, aber auch um Schüttgut oder Granulate handeln.

Figur 2 zeigt eine Draufsicht auf eine Elektrodenstruktur der Sonde 16. Elektroden 24 werden in dieser Ausführungsform auf eine flexible Leiterplatte aufgebracht, die anschließend gerollt wird, um eine rohrförmige Sonde 16 zu bilden. Prinzipiell sind aber auch andere Geometrien der Sonde 16 denkbar, und ebenso kann die Sonde 16 mit den Elektroden 24 auch auf andere Weise als über Verformungen einer zunächst flachen, flexiblen Leiterplatte aufgebracht hergestellt werden.

Die Darstellung der Sonde 16 in Figur 2 ist gegenüber der Figur 1 um 90° gedreht. Die Längserstreckung der Sonde 16, die in der üblichen Anwendung wie in Figur 1 vertikal in einen Behälter 12 eingetaucht wird, liegt somit in Figur 2 horizontal. In dieser Längserstreckung ist die Sonde 16 segmentiert, bildet also eine Vielzahl von Segmenten 28, wobei jedes Segment 28 mehrere, im gezeigten Beispiel sechs nebeneinander angeordnete Elektroden 24 aufweist. In der Längsrichtung erstrecken sich die Elektroden 24 jeweils vollständig über ein Segment 28, wobei ein gewisser Abstand zur elektrischen Entkopplung gegenüber Elektroden 24 des nächsten Segments 28 gewahrt bleibt. In Querrichtung senkrecht zu der Längsrichtung liegen die Elektroden 24 nebeneinander. Dabei ist die dargestellte Rechteckform der Elektroden 24 wegen der einfachen Geometrie zwar bevorzugt, aber nicht zwingend erforderlich. Insbesondere Scherungen in Querrichtung, also quasi ein Verdrehen der rohrförmigen Sonde 16 auf einer beliebigen Anzahl von Höhenlinien, ändern wenig an der Messleistung. Bei solchen Scherungen bleiben Breite und Abstand der Elektroden 24 bezogen auf eine feste Höhenlinie gleich, während in Längsrichtung beliebig gekrümmte Abgrenzungslinien der Elektroden 24 entstehen.

Durch geeignete Geometrie und Anordnung der Elektroden 24 kann die Empfindlichkeit der Messung, definiert als Kapazitätsänderung je Füllstandsänderung, gesteigert werden. Es zeigt sich, dass bei Variation der lateralen Abstände zwischen den Elektroden 24, also in Figur 2 der vertikalen Abstände quer zu der Längsrichtung, ein Maximum bei etwa 1,7 mm Abstand erreichbar ist. Die Empfindlichkeit bleibt in einem Bereich von etwa 1,6-2,1 mm um dieses Maximum ähnlich hoch. Auch bezüglich der Breite der Elektroden 24, die wegen der gedrehten Darstellung der Sonde 16 in Figur 2 der Höhe der gezeigten Rechtecke entspricht, gibt es ein Optimum der Empfindlichkeit bei etwa 10 mm.

Es wird dann vorzugsweise eine Anzahl Elektroden 24 nebeneinander angeordnet, bei der diese optimalen Abstände und Breiten eingehalten werden und zugleich die vorhandene Oberfläche der Sonde 16 ausgenutzt wird. Beispielsweise können auf dem Umfang einer rohrförmigen Sonde 16 mit einem Außendurchmesser von 22 mm vier oder sechs Elektroden unter Einhaltung dieser Bedingungen untergebracht werden.

Die Länge der Elektroden 24 andererseits ist durch die Höhe der Segmente 28 vorgegeben. Deren Anzahl wiederum entspricht der Anzahl von Auswertungskanälen in der Mess- und Auswerteeinheit 20. Eine typische Anzahl ist sechzehn oder zweiunddreißig, aber auch abweichende Anzahlen sind möglich.

Prinzipiell kann anstelle der erläuterten Geometrie der Elektroden 24 auch eine Kammstruktur eingesetzt werden. Nun ist es aber so, dass sich das Feld zwischen den Elektroden nur bis zu einer Tiefe in das Medium 14 hinein erstreckt, deren Größenordnung dem Abstand zwischen den Elektroden 24 entspricht. Bei einer Kammstruktur sind diese Abstände sehr klein, insbesondere die genannten optimalen Elektrodenabstände bei Weitem unterschritten. Da die Sonde 24 in der Regel mit einer Schutzschicht gegen Einflüsse des Mediums 14 ausgestattet ist, kommt bei einer Kammstruktur das Feld praktisch nicht mehr mit dem Medium 14 in Kontakt, so dass die Kapazitätsmessung zu unempfindlich wird. Sofern die Sonde 24 nicht mit einer Schutzschicht versehen oder diese Schutzschicht sehr dünn ist, beispielsweise eine Lackschicht von einigen zehn Mikrometern, lässt sich aber auch eine Kammstruktur umsetzen.

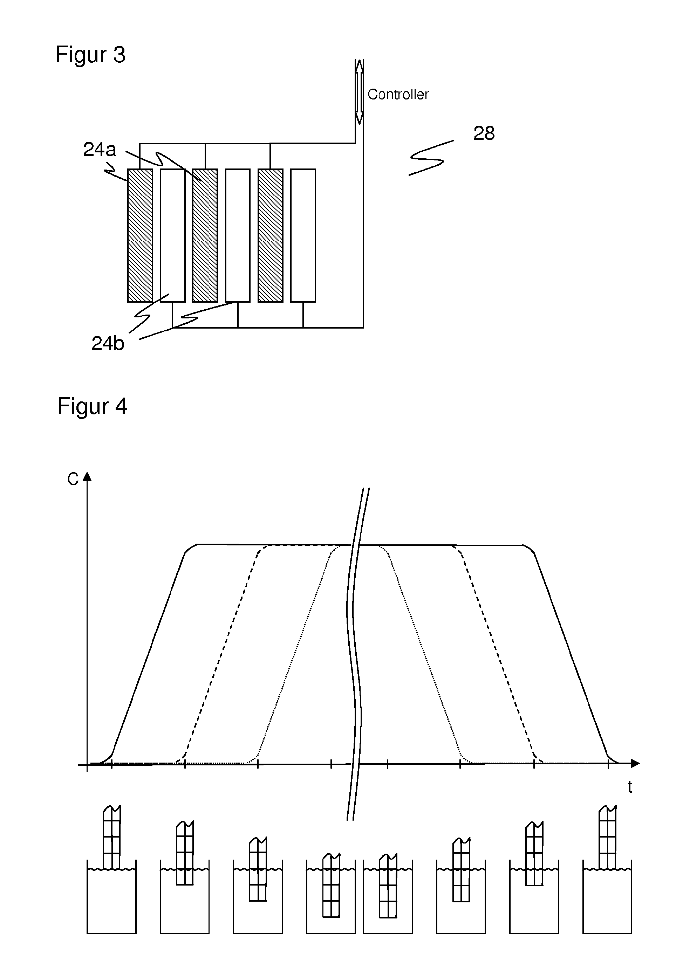

Figur 3 zeigt die Elektroden 24 eines einzelnen Segments 28. Kapazitäten werden jeweils zwischen zwei Elektroden 24a, 24b oder Gruppen von Elektroden 24a, 24b gemessen. Dazu können beispielsweise je drei Elektroden 24a, 24b alternierend zu einer gemeinsamen Elektrode verbunden sein, wie in Figur 3 durch unterschiedliche Schraffur und Verbindungen zu der Mess- und Auswerteeinheit 20 gezeigt. Das ist aber rein beispielhaft zu verstehen. Ebenso ist denkbar, dass mehrere Messungen zwischen jeweils benachbarten Elektroden 24 stattfinden, oder eine oder mehrere Kapazitätsmessungen zwischen beliebigen anderen Kombinationen von Elektroden 24 eines Segments 28.

Die Kapazitätsmessung wird durch die Mess- und Auswerteeinheit 20 vorgenommen. Beispielsweise wird eine definierte Ladungsmenge aufgeladen und die dabei erzeugte Spannung gemessen. Aufgrund der explodierenden Entwicklung kapazitiver Bedienelemente vor allem für den Mobilfunk- und PC-Bereich gibt es fertige integrierte Bausteine, die Kapazitätsmessungen auf einer Vielzahl von Kanälen vornehmen und das Ergebnis als digitalen Messwert bereitstellen. Solche Bausteine sind zumindest parametrierbar und oft auch frei programmierbar, so dass sie flexibel anpassbar sind und damit einen kostengünstigen, zugleich höchst leistungsfähigen Kern der Mess- und Auswerteeinheit 20 bilden können.

Abweichend von der Darstellung der Figur 3 erfolgt die Kontaktierung jedes Segments 28 vorzugsweise von oben. Dadurch kann die Sonde 16 auf beliebige Längen gekürzt werden, ohne die Funktionsfähigkeit des abgeschnittenen Segments 28 zu beeinträchtigen.

Figur 4 illustriert eine idealisierte Messung mit dem Füllstandssensor 10. Dargestellt ist im oberen Teil der Figur ein zeitlicher Verlauf der Kapazitätsmessung bei gleichmäßigem Eintauchen und anschließendem Auftauchen des Füllstandssensors 10 in den Behälter 12. Einige Positionen der hier beispielhaft nur bis zum dritten Segment 28 berücksichtigten Sonde 16 des Füllstandssensors 10 sind im unteren Teil der Figur 4 zur Veranschaulichung der Bewegung der Sonde 16 dargestellt.

Der für die Füllstandsmessung wesentliche Signalverlauf besteht darin, dass beim ersten Eintauchen zunächst die Messkurve an dem untersten Segment 28 linear ansteigt, bis dieses vollständig von dem Medium 14 bedeckt ist und dann von dem gestrichelt dargestellten zweituntersten und schließlich von dem gepunktet dargestellten drittuntersten Segment 28 abgelöst wird. Dieses Verhalten setzt sich bei einer realen längeren Sonde mit einer Vielzahl von Segmenten 28 entsprechend fort. Beim anschließenden Herausziehen der Sonde 16 aus dem Medium 14 kehrt sich der Vorgang um. Abweichungen von einem linearen Anstieg können durch Einlernen der abweichenden Kennlinie kompensiert werden. Für die Messung bedarf es lediglich eines monotonen Zusammenhangs, um von der Kapazität auf die Füllhöhe rückschließen zu können. Etwaige gegenseitige Offsets aufgrund unterschiedlicher Grundkapazitäten im Zustand ohne Medium 14 sind in Figur 4 bereits durch Kalibrierung eliminiert. Da sich solche Grundkapazitäten während des Betriebs beispielsweise durch mechanische Einflüsse auf die Elektroden 24 verändern können, ist denkbar, diese Kalibrierung im Betrieb zu wiederholen. Dazu werden Referenzmessungen an Segmenten 28 vorgenommen, von denen aufgrund des aktuell bestimmten Füllstands klar ist, dass sie derzeit vollständig oder gar nicht von Medium 14 bedeckt sind. Wird an mehreren Segmenten 28 eine ähnliche Änderung der Grundkapazität gemessen, kann diese auch für andere Segmente 28 übernommen werden.

Wie dem zeitlichen Verlauf entnommen werden kann, steigt die Kapazität bereits leicht an, noch ehe die Sonde 16 das Medium 14 berührt. Das liegt an entsprechenden nach unten gerichteten Streufeldern und wiederholt sich für spätere Segmente 28 analog. Ebenso erhöht sich die Kapazität aufgrund eines analogen Effektes auch noch leicht nach dem vollständigen Eintauchen. In diesen Bereichen ist aber das betroffene Segment 28 für die Messung noch nicht oder nicht mehr zuständig.

Die Messung gemäß Figur 4 dient nur der Erläuterung des Prinzips. Bei einer tatsächlichen Messung liefern die meisten Segmente 28 einen maximalen oder minimalen Kapazitätswert, da sie vollständig von dem Medium 14 bedeckt beziehungsweise gar nicht von dem Medium 14 bedeckt sind. Das Segment 28, bei dem der Übergang zwischen Medium 14 und Luft liegt, ergibt einen kontinuierlichen Messwert. Dieser kann unmittelbar nur bei bekannten dielektrischen Eigenschaften des Mediums 14 in einen Füllstand umgerechnet werden. Dazu wird das Medium 14 parametriert oder in einer Referenzmessung an einer zusätzlichen Referenzelektrode oder an einem bekannterweise vollständig bedeckten Segment 28 bei zumindest etwas gefülltem Behälter 12, beispielsweise an dem untersten Segment 28, die Dielektrizitätskonstante des Mediums 14 vermessen. Alternativ kann auch eine von den dielektrischen Eigenschaften des Mediums 14 unabhängige Messung durchgeführt werden, wie dies für sich aus der einleitend genannten US 6,490,920 B1 bekannt ist. Dazu werden die Elektroden 14 eines Segments 24 nochmals derart beispielsweise dreiecksförmig unterteilt, dass zwei Messungen mit jeweils unterschiedlicher Abhängigkeit der Kapazitätsänderung von der Füllhöhe ermöglicht werden. Aus dieser doppelten Messung kann dann der Füllstand auch ohne Kenntnis der Dielektrizitätskonstante abgeleitet werden.

Die Mess- und Auswerteeinheit 20 vermisst vorzugsweise in der erläuterten Weise die Kapazitäten in allen Segmenten 28 und sucht dann dasjenige Segment 28, wo sich die Oberfläche des Mediums 14 befindet, anhand von dessen Zwischenwert unterhalb der maximalen und oberhalb der minimalen Kapazität, um daraus den Füllstand abzuleiten. Allein durch Auffinden dieses Segments 28 ist der Füllstand bereits mit der diskreten Auflösung der Höhe der Segmente 28 bestimmt. Der zu einer kontinuierlichen, hochaufgelösten Messung fehlende Anteil des Füllstandswertes wird aus der Kapazität des aufgefundenen Segments 28 ermittelt.

Zusätzlich sind Plausibilisierungen denkbar, denn oberhalb des aufgefundenen Segments 28 sollten sich nur Segmente 28 mit minimaler und unterhalb nur Segmente 28 mit maximaler Kapazität finden. Beispielsweise wird eine Kapazitätsmessung mit einem Zwischenwert an einem Segment 28 ignoriert, dessen Nachbarn nicht die erforderlichen maximalen und minimalen Kapazitätswerte ergeben. Dadurch werden Belagsbildungen und Spritzer des Mediums 14 zumindest so lange kompensiert, wie sie nur einen gewissen Anteil des Segments 28 betreffen.

Die bisherige Betrachtung setzt voraus, dass sich nur ein Medium 14 in dem Behälter 12 befindet. Es gibt aber Situationen, in denen mehrere aufeinander geschichtete Medien 14 vorhanden sind, etwa Schaum auf einer Flüssigkeit oder Wasser, das sich unten in einem mit Öl gefüllten Behälter 12 absetzt. Mit dem Füllstandssensor 10 lassen sich derartige geschichtete Medien 14 ebenfalls erkennen und messen. Dazu wird in einem ersten Schritt das oberste Segment 28 gesucht, dessen Kapazität um einen vorgegebenen Schwellwert von dessen Grundkapazität abweicht. Bis zu diesem Segment 28 sind folglich Medien 14 vorhanden, oberhalb liegt nur noch Luft, da andernfalls auch für ein noch höher gelegenes Segment 28 eine Kapazität oberhalb der Grundkapazität gemessen worden wäre. Da somit sämtliche tiefer liegenden Segmente 28 vollständig von Medien 14 bedeckt sind, kann aus deren gemessener Kapazität die dielektrische Konstante des jeweils umgebenden Mediums 14 gemessen werden. An Segmenten 28, wo eine Grenzschicht zwischen zwei Medien liegt, ist eine einzelne Messung noch unterbestimmt, da die Kapazität sowohl vom unbekannten Füllstand der beiden Medien als auch deren zunächst unbekannter Dielektrizitätskonstante abhängt. Dennoch ist zumindest mit der Auflösung der Höhe der Segmente 28 auch der Füllstand geschichteter Medien 14 vermessen. Zudem kann die Unterbestimmtheit durch mehrere Messungen ausgeglichen und nach und nach ein kontinuierlicher Füllstand für alle Medien 14 ausgegeben werden, beispielsweise weil nach und nach mit veränderter Füllsituation in dem Behälter 12 die Dielektrizitätskonstanten bekannt werden, sobald sich Segmente 28 gefunden haben, die zumindest vorübergehend vollständig von einem bestimmten Medium 14 umgeben waren.

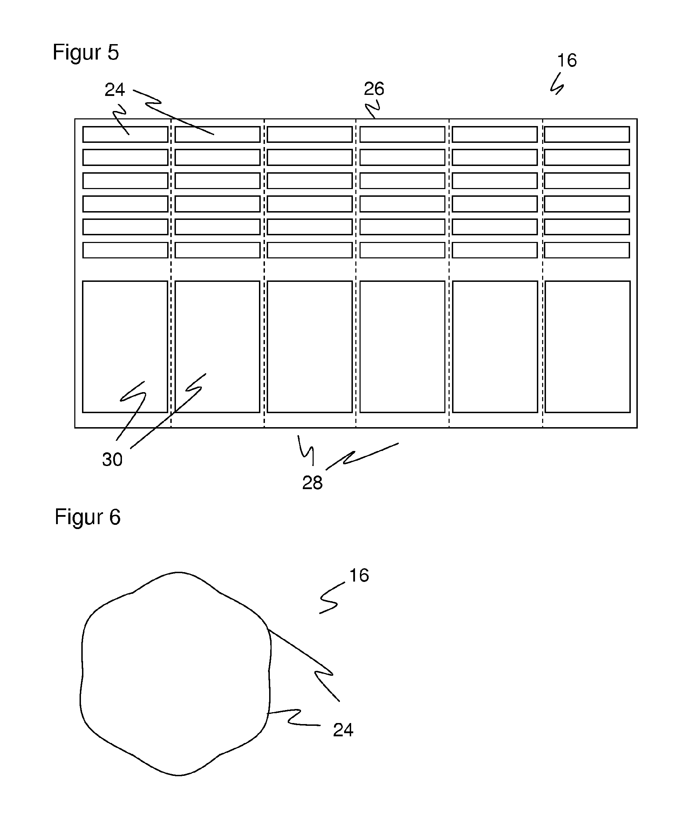

Figur 5 zeigt eine weitere Ausführungsform der Leiterplatte 26 mit den Elektroden 24. Im Unterschied zu der Ausführungsform gemäß Figur 2 sind hier zusätzliche Abschirmelektroden 30 vorgesehen. Abweichend von der Darstellung kann auch mehr als eine Abschirmelektrode 30 je Segment 28 vorgesehen sein. Die Leiterplatte 26 kann doppelt gerollt werden, so dass die Abschirmelektroden 30 auf einer inneren Schicht und die Elektroden 24 auf einer äußeren Schicht einer rohrförmigen Sonde 16 liegen. Damit sind die Elektroden 24 nach innen hin abgeschirmt.

In einer Ausführungsform ist die Sonde 16 innen hohl, beispielsweise indem ein Leerrohr in dem Inneren der Sonde 16 vorgesehen ist. Bei einer Sonde 16 aus Kunststoff wird das Gewicht reduziert und dennoch die mechanische Stabilität gegenüber einem Vollkörper sogar noch erhöht. Außerdem wird die Grundkapazität verringert, weil sich im Inneren der Sonde 16 kein Material befindet. Damit werden die durch den Füllstand des Mediums 14 bedingten Kapazitätsänderungen relativ zur Grundkapazität größer und können deshalb von der Mess- und Auswerteeinheit 20 leichter und genauer bestimmt werden.

Schließlich ist denkbar, die Mess- und Auswerteeinheit 20 in das Innere der Sonde 16 zu verlagern. Das gilt insbesondere für eine weitere Ausführungsform, bei der neben der Mess- und Auswerteeinheit 20 mindestens eine zusätzliche dezentrale Mess- und Auswerteeinheit vorgesehen ist. Diese dezentrale Mess- und Auswerteeinheit ist lokal für die Segmente 28 in ihrer Nähe zuständig und kommuniziert vorzugsweise nur digital mit weiteren dezentralen Mess- und Auswerteeinheiten oder der Mess- und Auswerteeinheit 20. Auf diese Weise genügen auch bei langen Sonden 16 kurze Leiterbahnen mit allenfalls geringen eigenen kapazitiven Beiträgen für die Kapazitätsmessungen.

Wie oben schon erläutert, ergibt sich nur dann eine signifikante Änderung der Kapazität mit der Füllhöhe des Mediums 14, wenn auch Feldanteile zwischen zwei Elektroden 24 in das Medium 14 hineinragen. Dazu ist bei einer rohrförmigen Sonde 16 eine gewisse Krümmung erforderlich. Figur 6 zeigt einen Querschnitt einer Ausführungsform der Sonde 16, mit der bei gleichem Durchmesser die Krümmung im Bereich der Elektroden 24 und damit auch die Empfindlichkeit der Sonde 15 erhöht ist. Die Elektroden 24 bilden dabei gewissermaßen konvexe Ausbuchtungen mit gegenüber dem Grundquerschnitt der Sonde 16 erhöhter Krümmung.

Es ist möglich, den Füllstandssensor 10 mit einem zusätzlichen Temperatursensor auszurüsten. Die gemessene Temperatur kann für sich als weitere Prozessgröße ausgegeben, aber auch für eine temperaturabhängige Korrektur der Füllstandsmessung genutzt werden. Der Temperatursensor befindet sich beispielsweise unten an der Sonde 16. Damit die Kommunikation mit der Mess- und Auswerteeinheit 20 die Kapazitätsmessungen nicht beeinflusst, wird das Zeitverhalten vorzugsweise abgestimmt, beispielsweise indem Messpausen der Kapazitätsmessung ausgenutzt werden. Die Datenleitungen zur Anbindung des Temperatursensors können dann ebenfalls auf der Leiterplatte 26 in enger Nachbarschaft zu den Leiterbahnen für die Kapazitätsmessungen angebracht werden, ohne das Messverhalten zu stören.

## Patentansprüche

1. Kapazitiver Füllstandssensor (10) mit einer Sonde (16), die in einer Längsrichtung mehrere aufeinanderfolgende Segmente (28) mit in den Segmenten (28) angeordneten Elektroden (24) aufweist, wobei eine Mess- und Auswerteeinheit (20) vorgesehen ist, die dafür ausgebildet ist, eine Kapazität an den Elektroden (24) zu bestimmen und daraus einen Füllstand zu berechnen,
**dadurch gekennzeichnet,**
**dass** in jedem Segment (28) mehrere Elektroden (24) angeordnet sind und die Mess- und Auswerteeinheit (20) die Kapazität zwischen Elektroden (24) eines Segments (28) bestimmt.

2. Füllstandssensor (10) nach Anspruch 1,
wobei sich die Elektroden (24) in Längsrichtung über jeweils ein gesamtes Segment (28) erstrecken.

3. Füllstandssensor (10) nach Anspruch 1 oder 2,
wobei die Elektroden (24) eines Segments (28), zwischen denen die Mess- und Auswerteeinheit (20) die Kapazität bestimmt, nebeneinander angeordnet sind.

4. Füllstandssensor (10) nach einem der vorhergehenden Ansprüche,
wobei der Abstand zwischen den Elektroden (24) eines Segments 0,5-5 mm, insbesondere 1,6-2,1 mm beträgt, und/oder wobei die Elektroden (24) eine Breite von 5-20 mm, insbesondere 10 mm aufweisen.

5. Füllstandssensor (10) nach einem der vorhergehenden Ansprüche,
wobei jedes Segment (28) eine maximal mögliche Anzahl von nebeneinander angeordneten Elektroden (24) vorgegebener Breite in einem vorgegebenen Abstand zueinander aufweist.

6. Füllstandssensor (10) nach einem der vorhergehenden Ansprüche,
wobei jedes Segment (28) eine der der Mess- und Auswerteinheit (20) zugewandte obere Seite aufweist, von welcher die Elektroden (24) des Segments (28) kontaktiert sind.

7. Füllstandssensor (10) nach einem der vorhergehenden Ansprüche, wobei die Elektroden (24) und die Leiterbahnen, welche die Elektroden (24) mit der Mess- und Auswerteeinheit (20) verbinden, auf einer flexiblen Leiterplatte (26) ausgebildet sind, welche anschließend zu einer gewünschten Form der Sonde (16) verformt, insbesondere rohrförmig gerollt ist.

8. Füllstandssensor (10) nach Anspruch 7,
wobei die Leiterplatte (26) Abschirmelektroden (30) aufweist, die insbesondere durch doppeltes Aufrollen eine innere Abschirmung der Sonde (16) bilden.

9. Füllstandssensor (10) nach einem der vorhergehenden Ansprüche, wobei die Sonde (16) rohrförmig mit den Elektroden (24) am Außenumfang und einem Leerrohr im Inneren ausgebildet ist.

10. Füllstandssensor (10) nach einem der vorhergehenden Ansprüche, wobei die Sonde (16) im Wesentlichen rohrförmig ausgebildet ist, jedoch in Umfangsrichtung konvexe Wölbungen dort aufweist, wo Elektroden (24) angeordnet sind.

11. Füllstandssensor (10) nach einem der vorhergehenden Ansprüche, wobei mindestens eine dezentrale Mess- und Auswerteeinheit (20) längs der Sonde (16) vorgesehen ist, insbesondere im Inneren der Sonde (16), und wobei der Datenaustausch zu der Mess- und Auswerteeinheit (20) digital erfolgt.

12. Füllstandssensor (10) nach einem der vorhergehenden Ansprüche, wobei ein Temperatursensor in die Sonde (16) integriert ist, und wobei die Mess- und Auswerteeinheit (20) dafür ausgebildet ist, mit dem Temperatursensor in Messpausen der Kapazitätsmessung zu kommunizieren.

13. Füllstandssensor (10) nach einem der vorhergehenden Ansprüche, wobei die Mess- und Auswerteeinheit (20) dafür ausgebildet ist, bei bekanntem Füllzustand bei einem Segment eine Referenzmessung der Grundkapazität durchzuführen, insbesondere zur Autokalibration während des Betriebs.

14. Füllstandssensor (10) nach einem der vorhergehenden Ansprüche,
wobei die Mess- und Auswerteeinheit (20) für einen Plausibilitätstest ausgebildet ist, bei dem eine gemessene Kapazität an einem Segment (28), welche mit mindestens einem anderen Segment (28) nicht konsistent ist, unberücksichtigt bleibt.

15. Verfahren zur Bestimmung des Füllstands eines Mediums (14) in einem Behälter (12), bei dem eine Sonde (16) in den Behälter (12) eingetaucht ist, die in einer Längsrichtung mehrere aufeinanderfolgende Segmente (28) mit in den Segmenten (28) angeordneten Elektroden (24) aufweist, wobei eine Kapazität an den Elektroden (24) bestimmt und daraus ein Füllstand berechnet wird, **dadurch gekennzeichnet,**
**dass** die Kapazität zwischen einem Elektrodenpaar (24) innerhalb eines Segments (28) gemessen wird.
